# EUROPÄISCHE PATENTSCHRIFT

(11) **EP 0 998 845 B1**
(45) Veröffentlichungstag und Bekanntmachung des Hinweises auf die Patenterteilung: **28.07.2004**
(21) Anmeldenummer: 99121385.1
(22) Anmeldetag: 27.10.1999
(51) Int. Cl.: A01F 15/08

(54) **Einrichtung zum Betätigen einer Kupplung für die Bindeeinrichtung einer Grossballenpresse**
Device for actuating a clutch for the tying device of a large bale press
Dispositif d'actionnement de l'embrayage du dispositif de liage d'une presse à grandes balles

(30) Priorität: 05.11.1998 DE 19851021
(43) Veröffentlichungstag der Anmeldung: 10.05.2000
(73) Patentinhaber: Usines Claas France, 57141 Metz (FR)
(72) Erfinder: Arnould, Cyrille, 57645 Montoy-Flanville (FR); Nonhoff, Ansgar, 66798 Wallerfangen (DE); Mesmer, Denis, 57320 Bouzonville (FR)
(74) Vertreter: Kus, Sascha

(56) Entgegenhaltungen:
- EP-A- 0 293 025
- EP-A- 0 573 342
- DE-C- 767 505
- US-A- 4 649 812
- US-A- 5 783 816

## Beschreibung

Die Erfindung bezieht sich auf eine Einrichtung zum Betätigen der Kupplung für die Bindeeinrichtung einer Großballenpresse für landwirtschaftliches Erntegut nach dem Oberbegriff des Patentanspruches 1.

Derartige Einrichtungen sind bereits in verschiedenen Ausführungen mit mechanischer und elektrischer Betätigung bekannt. Bei einer mechanischen Variante (DE 27 38 500 A1) wird die Ballenlänge von einem drehbaren Sternrad ermittelt und dessen Drehbewegung über ein Zahnsegment und einen Verbindungshebel zu einem schwenkbar gelagerten Anschlag im Kupplungsbereich übertragen. Sobald die vorgewählte Ballenlänge erreicht ist, wird über den Anschlag die Kupplungsbetätigung gesteuert und der Bindevorgang des Ballens ausgelöst. Mit dieser Einrichtung wird bei Ballenpressen mit kleinen und mittleren Leistungen eine ausreichende Funktionssicherheit gewährleistet. Bei Großballenpressen hingegen ist aufgrund von höheren Preßleistungen und Arbeitsgeschwindigkeiten eine zuverlässige und störungsfreie Betriebsweise nicht unter allen auftretenden Bedingungen gegeben. Deshalb wurden für solche Pressen bereits elektrische Betätigungseinrichtungen für die Kupplung der Bindeeinrichtung entwickelt. Aus der EP 0 573 342 A1 ist beispielsweise eine Ballenpresse bekannt, bei der die Bindeeinrichtung durch ein Sternrad zum Ermitteln der Ballenlänge in Verbindung mit einem elektrischen Sensor gesteuert wird. Entsprechend der Länge des Ballens sendet der Sensor ein Signal an eine Steuereinrichtung, die ein Steuersignal an die Vorrichtung zum Auslösen des Bindevorganges abgibt. Die Auslösevorrichtung umfaßt einen Hubmagnet und eine Kupplung, wobei der Hubmagnet durch das Steuersignal betätigt wird. Mit der dadurch ausgelösten Hubbewegung des Stößels des Hubmagneten wird die Schaltung der Kupplung bewirkt. Bei auftretenden Spannungsschwankungen innerhalb des elektrischen Bordnetzes der Ballenpresse, die insbesondere durch weitere elektrische Verbraucher hervorgerufen werden, kommt es bei dieser Ausführung infolge einer nicht ausreichenden Hubkraft des Hubmagneten jedoch zu Auslöseproblemen der Kupplung und damit zu Funktionsstörungen beim Bindevorgang.

Der Erfindung liegt die Aufgabe zugrunde, mit einem geringen konstruktiven Aufwand eine funktionssichere Betätigungseinrichtung für die Kupplung der Bindeeinrichtung zu schaffen. Erfindungsgemäß wird diese Aufgabe durch die im Patentanspruch 1 genannten Merkmale gelöst. Weitere vorteilhafte Ausführungen des Erfindungsgegenstandes ergeben sich aus den nachgeordneten Ansprüchen.

Die vorteilhafte Ausführung der Kupplungsbetätigung ermöglicht eine sichere und störungsfreie Betriebsweise der Bindeeinrichtung und damit eine zuverlässige Ballenbindung. Da die elektromotorische Steuerng der Kupplung unabhängig von der jeweiligen elektrischen Bordspannung mit einem geringen Leistungsbedarf erfolgt, ist das Auslösen des Kupplungsvorganges jederzeit zum erforderlichen Zeitpunkt gewährleistet.

Die Erfindung wird nachstehend an einem Ausführungsbeispiel näher erläutert:

In der dazugehörigen Zeichnung zeigen
- Figur 1: eine Seitenansicht des Preßkanals einer Großballenpresse mit dem Bereich der Bindeeinrichtung,
- Figur 2: eine Seitenansicht der Betätigungseinrichtung für die Kupplung mit dem Schalthebel innerhalb der Umlaufbahn der Schaltklinke (Kupplung ausgekuppelt),
- Figur 2a: die Betätigungseinrichtung für die Kupplung mit dem Schalthebel außerhalb der Umlaufbahn der Schaltklinke (Kupplung eingekuppelt),
- Figur 2b: die Betätigungseinrichtung für die Kupplung mit dem Schalthebel außerhalb der Umlaufbahn der Schaltklinke, wobei sich die Schaltklinke in der unteren Stellung befindet (Kupplung eingekuppelt),
- Figur 3: die Steuerungsvorrichtung für den Schalthebel in der Ansicht III nach Figur 5,

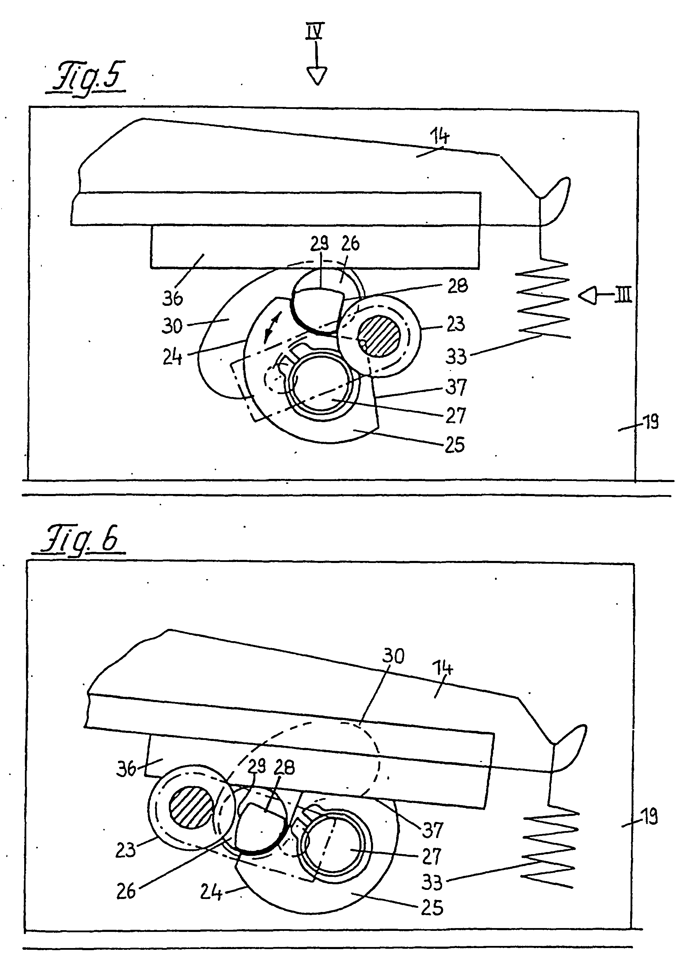

- Figur 4: die Steuerungsvorrichtung für den Schalthebel in der Ansicht IV nach Figur 5, .
- Figur 5: die Steuerungsvorrichtung im Schnitt V - V nach Figur 4,
- Figur 6: die Steuerungsvorrichtung in einer Schnittdarstellung nach Figur 2a.

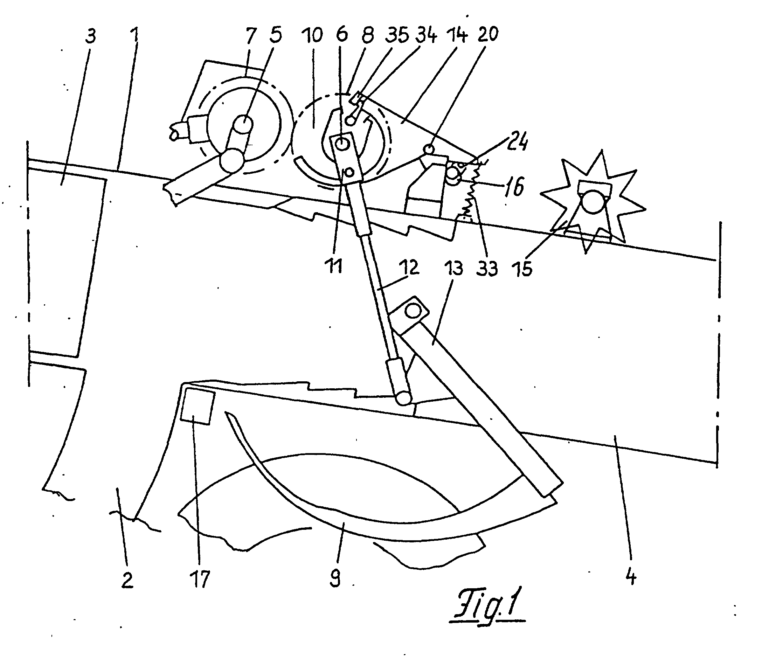

Bei einer in der Figur 1 nur teilweise dargestellten Großballenpresse 1 mit einem Zuführkanal 2, einem Preßkolben 3, einem Preßkanal 4 und einer Bindevorrichtung wird über eine Vorgelegewelle 5 eine parallel dazu verlaufende Knoterwelle 6 angetrieben. Auf der Vorgelegewelle 5 und auf der Knoterwelle 6 ist je ein Stirnrad 7, 8 drehfest angeordnet, die miteinander in Eingriff stehen. Durch die Stirnräder 7, 8 wird die Drehbewegung von der Vorgelegewelle 5 auf die Knoterwelle 6 übertragen. Von der Knoterwelle 6 wird der Antrieb der Bindenadeln 9 abgeleitet. Die Antriebsübertragung erfolgt dabei über eine auf der Knoterwelle 6 angeordneten Kupplung 10 und eine Kurbel 11 zu einer Zugstange 12 und einem Schwingarm 13 zu den Bindenadeln 9. Während des Preßvorganges des Ballens ist der Antrieb zu den Bindenadeln 9 durch die Kupplung 10 unterbrochen. Die Bindenadeln 9 befinden sich dabei außerhalb des Preßkanals 4. Sobald die vorgewählte Ballenlänge erreicht ist, wird die Kupplung 10 über einen Schalthebl 14 betätigt und dadurch die Antriebsverbindung zu den Bindenadeln 9 hergestellt und der Bindevorgang des Ballens ausgelöst. Die Ermittlung der Ballenlänge erfolgt über ein oberhalb des Preßkanals 4 angeordnetes drehbares Sternrad 15, dessen zackenförmiger Umfang mit der Oberfläche des Ballens in Verbindung steht. Das Sternrad 15 ist mit einer nicht dargestellten elektronischen Zähleinrichtung bekannter Bauart verbunden, die beim Ereichen der eingestellten Ballenlänge einen elektrischen Schaltimpuls an einen Elektromotor 16 sendet, der die Steuerungsvorrichtung für den Schalthebel 14 der Kupplung 10 betätigt.

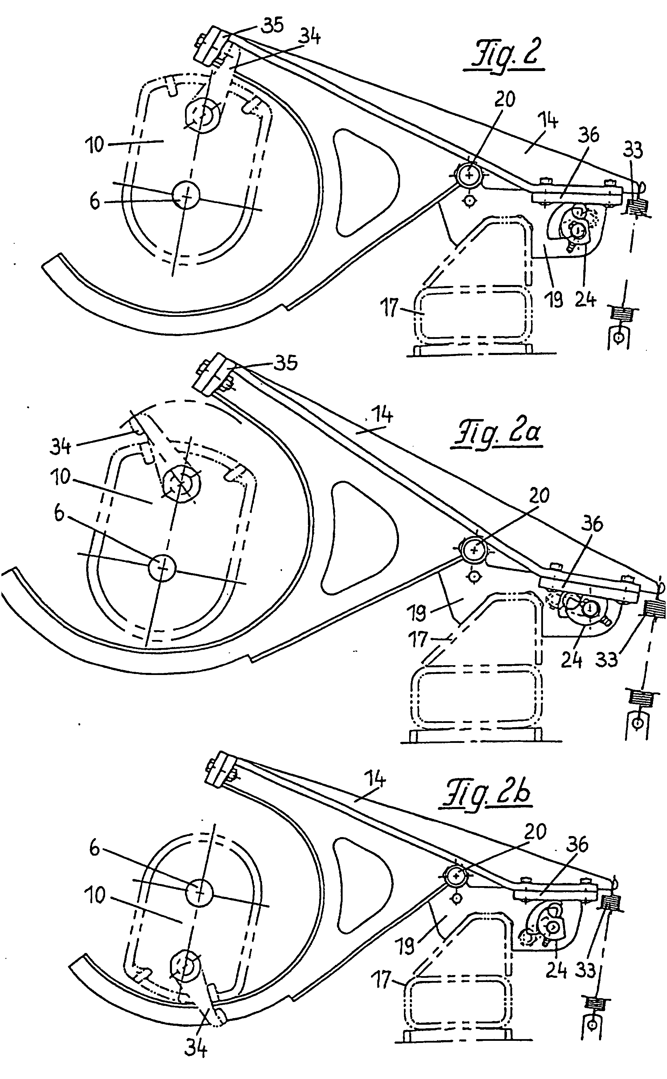

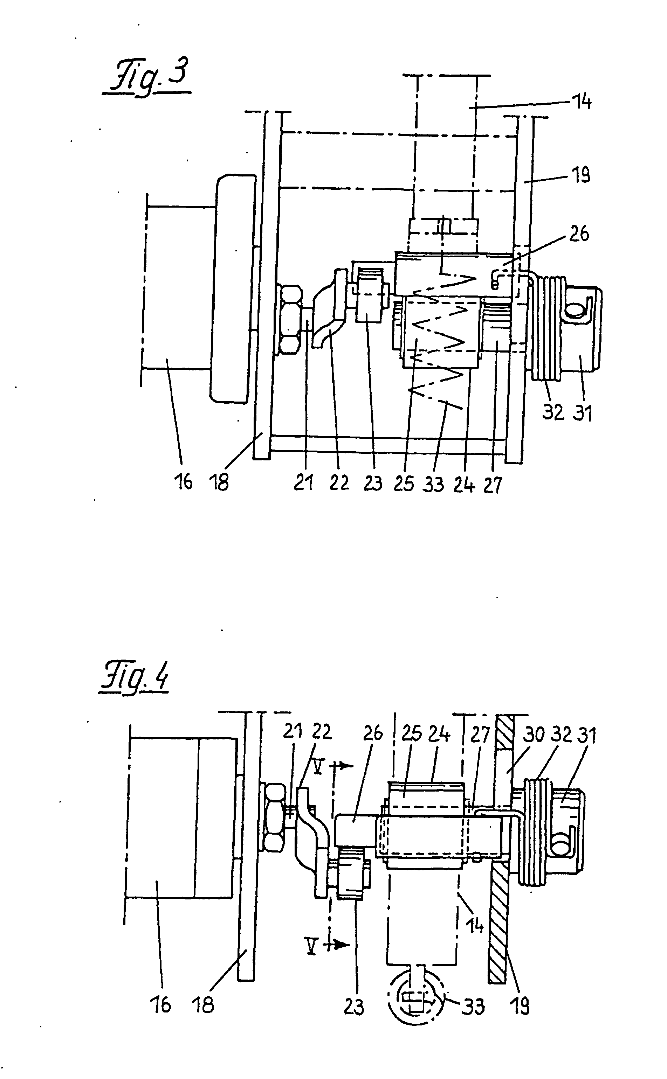

Als Elektromotor 16 wird vorzugsweise ein langsam laufender Scheibenwischermotor verwendet. Der Elektromotor ist an einer mit dem Pressenrahmen 17 verbundenen, vertikal verlaufenden Lagerplatte 18 im Bereich seitlich neben der Lagerung des Schalthebels 14 befestigt. Mit einem Abstand zur Lagerplatte 18 ist parallel zu dieser eine ebenfalls mit dem Pressenrahmen 17 fest verbundene Konsole 19 angebracht. Der Schalthebel 14 ist zwischen der Lagerplatte 18 und der Konsole 19 um eine Achse 20 schwenkbar gelagert. Die Steuerungsvorrichtung für den Schalthebel 14 schließt sich in axialer Richtung an den Elektromotor 16 an und befindet sich zwischen der Konsole 19 und der Lagerplatte 18 unterhalb des Kontaktbereiches des Schalthebels 14. Nach dem von der Ballenlänge abhängigen Einschalten des Elektromotors 16 führt er eine Umdrehung von 360 ° aus und betätigt dadurch die antriebsverbundene Steuerungsvorrichtung für den Schalthebel 14. Zu diesem Zweck ist an der Ausgangswelle 21 des Elektromotors 16 ein gekröpfter Kurbelarm 22 befestigt, an dessen freien Ende ein drehbare Kontaktrolle 23 angeordnet ist. Diese Kontaktrolle 23 steht mit einem Nocken 24 in Verbindung und überträgt auf diesen die Bewegung des Kurbelarms 22. Der Nocken 24 besteht aus einem Formteil 25 und einem damit fest verbundenen Kontaktbolzen 26, der eine Kontakt- beziehungsweise Stützfunktion für den Schalthebel 14 zu erfüllen hat. Der Kontaktbolzen 26 weist eine größere Länge als das Formteil 25 auf und steht an beiden Enden über das Formteil 25 über. Das Formteil 25 ist mit einer längsverlaufenden Bohrung zur Aufnahme eines Tragbolzens 27 versehen. Der Tragbolzen 27 ist drehfest in der Konsole 19 angeordnet. Der Nocken 24 wird auf dem Tragbolzen 27 geführt und ist um diesen entsprechend der Betätigungsvorrichtung schwenkbar. Der Kontaktbolzen 26 weist an seinem der Kontaktrolle 23 zugewandten Endbereich zwei angeformte Flächen 28, 29 auf Die Kontaktrolle 23 bewegt sich beim Schaltvorgang entlang der Fläche 28, um damit den Nocken 24 in die jeweils erforderliche Stellung zu bringen. Die Fläche 29 stellt eine weitere Abflachung des Kontaktbolzens 26 dar, damit die Kontaktrolle 23 den Bolzen 26 hinterlaufen kann. Neben dem Stirnseitenbereich des Kontaktbolzens 26 ist die Konsole 19 mit einer nierenförmigen, sich schräg nach oben erstreckenden Ausnehmung 30 versehen. In diese Ausnehmung 30 ragt das benachbarte Ende des Kontaktbolzens 26 hinein und wird darin beim Schaltvorgang geführt. Das Kopfende 31 des Tragbolzens 27 ist von einer Schenkelfeder 32 umgeben, die sich mit ihrem einen Schenkel am Tragbolzen 27 und mit dem anderen Schenkel in einer Bohrung des Kontaktbolzens 26 abstützt. Durch die Wirkung der Schenkelfeder 32 wird der Nocken 24 in die obere Stellung gebracht, in der der Kontaktbolzen 26 am oberen Ende der Ausnehmung 30 in der Konsole 19 zum Anschlag kommt. (Figur 5). In dieser Stellung (Figur 1, 2, 3, 5) stützt sich zwischen den Bindevorgängen der Schalthebel 24 auf dem Kontaktbolzen 26 ab beziehungsweise bringt der Kontaktbolzen 26 den Schalthebel 14 gegen die Kraft einer zwischen dem Pressenrahmen 17 und dem Endbereich des Schalthebels 14 befestigten Zugfeder 33 in die Umlaufbahn der Schaltklinke 34 der Kupplung 10. Beim Anschlagen der Schaltklinke 34 an die Auflage 35 des abgesenkten Schalthebels 14 erfolgt das Auskuppeln der Kupplung 10 und damit die Antriebsunterbrechung zu den Bindenadeln 9 (Figur 2). Während des Bindevorganges wird der Schalthebel 14 in bekannter Weise von dem umlaufenden Kupplungsformteil wieder in die Ausgangsstellung gedrückt, wobei sich der Kontaktbolzen 26 durch die Wirkung der Schenkelfeder 32 wieder unter dem Schalthebel 14 verstellt. Zwischenzeitlich stützt sich der Schalthebel 14 mit seiner Gleitplatte 36 auf der Anschlagfläche 37 des Formteils 25 ab (Figur 6).

### Bezugszeichenliste

- 1 -: Großballenpresse
- 2 -: Zuführkanal
- 3 -: Preßkolben
- 4 -: Preßkanal
- 5 -: Vorlegewelle
- 6 -: Knoterwelle
- 7, 8 -: Stirnrad
- 9 -: Bindenadeln
- 10 -: Kupplung
- 11 -: Kurbel
- 12 -: Zugstange
- 13 -: Schwingarm
- 14 -: Schalthebel
- 15 -: Sternrad
- 16 -: Elektromotor
- 17 -: Pressenrahmen
- 18 -: Lagerplatte
- 19 -: Konsole
- 20 -: Achse
- 21 -: Ausgangswelle
- 22 -: Kurbelarm
- 23 -: Kontaktrolle
- 24 -: Nocken
- 25 -: Formteil
- 26 -: Kontaktbolzen
- 27 -: Tragbolzen
- 28, 29 -: Flächen
- 30 -: Ausnehmung
- 31 -: Kopfende
- 32 -: Schenkelfeder
- 33 -: Zugfeder
- 34 -: Schaltklinke
- 35 -: Auflage
- 36 -: Gleitplatte
- 37 -: Anschlagfläche

## Patentansprüche

1. Einrichtung zum Betätigen der Kupplung (10) für die Bindeeinrichtung einer Großballenpresse für landwirtschaftliches Erntegut mit einer Vorrichtung zum Ermitteln der Ballenlänge und einer mit dieser zusammenwirkenden Steuerungsvorrichtung für einen schwenkbar gelagerten Schalthebel (14) für die Kupplung (10), **gekennzeichnet durch** folgende Merkmale:
a) die Vorrichtung zum Ermitteln der Ballenlänge ist über eine elektrische Schaltung mit einem Elektromotor (16) verbunden,
b) der Elektromotor (16) ist mit der Steurungsvorrichtung für den Schalthebel (14) antriebsverbunden,
c) die Steuerungsvorrichtung steht über einen Nocken (24) mit dem Kontaktbereich des Schalthebeln in Verbindung,
d) der Schalthebel (14) ist in Abhängikeit von der Bewegung des Nockens (24) in die Umlaufbahn einer Schaltklinke (34) der Kupplung (10) schwenkbar.

2. Einrichtung nach Anspruch 1, **dadurch gekennzeichnet**,
dadurch geken nzeichnet,
daß die Steuerungseinrichtung für die Schalthebel (14) unterhalb des Kontaktbereiches des Schalthebels 14 angeordnet ist.

3. Einrichtung nach den Anspruch 1 und 2,
**dadurch gekennzeichnet,**
**daß** der Elektromotor (16) als Scheibenwischermotor ausgebildet ist.

4. Einrichtung nach Anspruch 1 bis 3,
**dadurch gekennzeichnet,**
**daß** an der Ausgangswelle (21) des Elektromotors (16) ein Kurbelarm (22) befestigt ist, an dessen freiem Ende eine drehbare Kontaktrolle (23) angeordnet ist.

5. Einrichtung nach Anspruch 1 und 4,
**dadurch gekennzeichnet, dass**
die Nocke (24) von einer Kontaktrolle (23) gebildet wird.

6. Einrichtung nach Anspruch 1 und 5,
**dadurch gekennzeichnet,**
**daß** der Nocken (24) aus einem Formteil (25) und einem damit fest verbundenen Kontaktbolzen (26) besteht.

7. Einrichtung nach Anspruch 6,
**dadurch gekennzeichnet,**
**daß** der Kontaktbolzen (26) an beiden Enden über das Formteil (25) übersteht.

8. Einrichtung nach Anspruch 1 und 5 bis 7,
**dadurch gekennzeichnet,**
**daß** der Nocken (24) auf einem drehfest in einer Konsole (19) angeordneten Tragbolzen (27) geführt und um diesen schwenkbar ist.

9. Einrichtung nach Anspruch 1 und 5 bis 8,
**dadurch gekennzeichnet,**
**daß** der Kontaktbolzen (26) an seinem der Kontakrolle (24) zugewandten Endbereich zwei angeformte Kontaktflächen (28, 29) aufweist.

10. Einrichtung nach Anspruch 1 und 5 bis 9,
**dadurch gekennzeichnet,**
**daß** neben dem Stirnseitenbereich des Kontaktbolzens (26) die Konsole (19) mit einer nierenförmigen, sich schräg nach oben erstreckenden Ausnehmung (30) versehen ist, in die das benachbarte Ende des Kontaktbolzens (26) geführt ist.

11. Einrichtung nach Anspruch 8,
**dadurch gekennzeichnet,**
**daß** das Kopfende (31) des Tragbolzens (27) von einer Schenkelfeder (32) umgeben ist, wobei der eine Schenkel am Tragbolzen (27) und der andere Schenkel am Kontaktbolzen (26) befestigt ist.

12. Einrichtung nach Anspruch 1 und 2,
**dadurch gekennzeichnet,**
**daß** zwischen dem Pressenrahmen (17) und dem Endbereich des Schalthebels (14) eine Zugfeder (33) angeordnet ist.

## Claims

1. Apparatus for actuating the clutch (10) for the binding device of a big bale press for agricultural crop material having a device for determining the bale length and a control device co-operating therewith for a pivotably mounted shift lever (14) for the clutch (10), **characterised by** the following features:
a) the device for determining the bale length is connected to an electric motor (16) by way of an electric circuit,
b) the electric motor (16) is drivingly connected to the control device for the shift lever (14),
c) the control device is connected to the contact region of the shift lever by way of a cam (24), and
d) the shift lever (14) is pivotable into the orbit of a shift pawl (34) of the clutch (10) in dependence on the movement of the cam (24).

2. Apparatus according to claim 1 **characterised in that** the control device for the shift levers (14) is arranged beneath the contact region of the shift lever (14).

3. Apparatus according to claims 1 and 2 **characterised in that** the electric motor (16) is in the form of a windscreen wiper motor.

4. Apparatus according to claims 1 to 3 **characterised in that** fixed to the output shaft (21) of the electric motor (16) is a crank arm (22), at the free end of which is arranged a rotatable contact roller (23).

5. Apparatus according to claims 1 and 4 **characterised in that** the cam (24) is formed by a contact roller (23).

6. Apparatus according to claims 1 and 5 **characterised in that** the cam (24) comprises a shaped part (25) and a contact pin (26) fixedly connected thereto.

7. Apparatus according to claim 6 **characterised in that** the contact pin (26) projects at both ends beyond the shaped part (25).

8. Apparatus according to claims 1 and 5 to 7 **characterised in that** the cam (24) is guided on and is pivotable about a carrier pin (27) arranged non-rotatably in a bracket (19).

9. Apparatus according to claims 1 and 5 to 8 **characterised in that** the contact pin (26) has two contact surfaces (28, 29) formed thereon at its end region which is towards the contact roller (24).

10. Apparatus according to claims 1 and 5 to 9 **characterised in that** beside the end region of the contact pin (26) the bracket (19) is provided with a kidney-shaped opening (30) which extends inclinedly upwardly and into which the adjacent end of the contact pin (26) is guided.

11. Apparatus according to claim 8 **characterised in that** the head end (31) of the carrier pin (27) is surrounded by a leg spring (32), wherein the one leg is fixed to the carrier pin (27) and the other leg is fixed to the contact pin (26).

12. Apparatus according to claims 1 and 2 **characterised in that** a tension spring (33) is arranged between the press frame (17) and the end region of the shift lever (14).

## Revendications

1. Dispositif pour l'actionnement de l'embrayage (10) du dispositif de liage d'une presse à grosses balles pour des produits de récolte agricoles, comprenant un dispositif pour déterminer la longueur des balles et un dispositif de commande coopérant avec celui-ci pour commander un levier d'actionnement (14) de l'embrayage (10) monté pivotant, **caractérisé par** les caractéristiques suivantes :
a) le dispositif pour déterminer la longueur des balles est relié à un moteur électrique (16) par l'intermédiaire d'un circuit électrique,
b) le moteur électrique (16) est lié sur le plan de l'entraînement au dispositif de commande du levier d'actionnement (14),
c) le dispositif de commande est en relation avec la zone de contact du levier d'actionnement par l'intermédiaire d'une came (24),
d) le levier d'actionnement (14) peut être amené par pivotement en fonction du mouvement de la came (24) dans la trajectoire de déplacement d'un verrou (34) de l'embrayage (10).

2. Dispositif selon la revendication 1, **caractérisé par le fait que** le dispositif de commande pour le levier d'actionnement (14) est disposé au-dessous de la zone de contact du levier d'actionnement (14).

3. Dispositif selon les revendications 1 et 2, **caractérisé par le fait que** le moteur électrique (16) est conçu sous la forme d'un moteur d'essuie-glace.

4. Dispositif selon les revendications 1 à 3, **caractérisé par le fait qu'**à l'arbre de sortie (21) du moteur électrique (16) est fixé un bras de manivelle (22), dont l'extrémité libre porte un galet de contact (23), mobile en rotation.

5. Dispositif selon les revendications 1 à 4, **caractérisé par le fait que** la came (24) est formée d'un galet de contact (23)

6. Dispositif selon les revendications 1 et 5, **caractérisé par le fait que** la came (24) est formée d'un élément moulé (25) et d'une tige de contact (26) solidaire de celui-ci.

7. Dispositif selon la revendication 6, **caractérisé par le fait que** la tige de contact (26), aux deux extrémités, déborde par rapport à l'élément moulé (25).

8. Dispositif selon les revendications 1 et 5 à 7, **caractérisé par le fait que** la came (24) est guidée sur un axe de support (27) monté fixe dans une console (19) et peut pivoter autour de celui-ci.

9. Dispositif selon les revendications 1 et 5 à 8, **caractérisé par le fait que** la tige de contact (26), dans sa partie d'extrémité tournée vers le galet de contact (24), présente deux surfaces de contact (28, 29) façonnées d'une pièce avec ladite tige de contact.

10. Dispositif selon une des revendications 1 et 5 à 9, **caractérisé par le fait que** dans le voisinage de la partie frontale de la tige de contact (26), la console (19) est pourvue d'un évidement (30) réniforme qui s'étend en biais vers le haut, dans lequel l'extrémité voisine de la tige de contact (26) est guidée.

11. Dispositif selon la revendication 8, **caractérisé par le fait que** l'extrémité formant tête (31) de l'axe support (27) est entourée d'un ressort à branches (32), l'une des branches étant fixée à l'axe support (27) et l'autre branche à la tige de contact (26).

12. Dispositif selon les revendications 1 et 2, **caractérisé par le fait qu'**un ressort de traction (33) est disposé entre le châssis de presse (17) et l'extrémité du levier d'actionnement (14).
